# EUROPÄISCHE PATENTSCHRIFT

(11) **EP 0 690 766 B1**
(45) Veröffentlichungstag und Bekanntmachung des Hinweises auf die Patenterteilung: **28.05.1997**
(21) Anmeldenummer: 94911878.0
(22) Anmeldetag: 12.03.1994
(51) Int. Cl.: B23Q 11/10, B23D 59/02

(54) **GETRENNTE SCHMIERUNG UND KÜHLUNG BEI SPANABHEBENDEN BEARBEITUNGSPROZESSEN**
SEPARATE LUBRICATION AND COOLING FOR MACHINING PROCESSES
LUBRIFICATION ET REFROIDISSEMENT SEPARES LORS DE PROCESSUS D'USINAGE PAR ENLEVEMENT DE COPEAUX

(30) Priorität: 22.03.1993 DE 4309134
(43) Veröffentlichungstag der Anmeldung: 10.01.1996
(73) Patentinhaber: WAHL, Wilfried, D-56191 Weitersburg (DE)
(72) Erfinder: WAHL, Wilfried, D-56191 Weitersburg (DE)
(74) Vertreter: Flaccus, Rolf-Dieter, Dr.
(86) Internationale Anmeldenummer: EP9400776
(87) Internationale Veröffentlichungsnummer: WO9421424

(56) Entgegenhaltungen:
- EP-A- 0 269 997
- US-A- 4 635 513
- US-A- 5 042 618

## Beschreibung

Die Erfindung betrifft ein Verfahren und eine Vorrichtung zur Schmierung und Kühlung von Schneiden und/oder Werkstücken bei spanabhebenden Bearbeitungsprozessen, wobei den Schneiden bzw. den Werkstücken wenigstens zwei untereinander nicht mischbare Fluide zugeleitet werden und dabei
- ein fluides Substrat zur Herabsetzung der Reibung zwischen Schneide und Werkstück bzw. Span, sowie
- ein fluides Substrat zur Kühlung von Schneide,

Werkstück, Schneidenträger und fallweise auch der Späne verwendet wird,
- wobei die beiden Fluide getrennt voneinander in je einem separaten Behälter bevorratet bzw. aufbereitet
- und jedes Fluid von dem ihm zugeordneten Behälter über eine separate Zuführungsleitung zu einem Applikationsorgan gefördert, und
- jedes Fluid aus dem ihm zugeordneten Applikationsorgan auf das zu bearbeitende Werkstück bzw. auf die im Einsatz befindliche Schneide aufgesprüht werden.

Aus dem Lehrbuch "Dubbel", Taschenbuch für den Maschinenbau, 13 Auflage, 2. Band, Springer-Verlag Berlin/Heidelberg/New York, 1974, Seiten 675 und 676, ist unter dem Kapitel 4. "Kühlen und Schmieren " unter anderem ausgeführt:
Schneidflüssigkeiten sollen die Werkzeugschneide kühlen (Erhöhung von Standzeit und Schnittgeschwindigkeit), die Spanelemente schmieren (Verbesserung der Oberflächengestaltung), und die abgetrennten Späne fortspülen.

Weiter ist dazu ausgeführt: Durch Kühlen kann entweder bei gleichbleibender Schnittgeschwindigkeit die Standzeit des Werkzeugs verlängert oder bei gleicher Standzeit die Schnittgeschwindigkeit erhöht werden, im Durchschnitt bis zu 40 %. Weiter heißt es dort:
Von guten Schneidflüssigkeiten wird gefordert, daß sie neben hoher Schmierwirkung und Kühlfähigkeit niedrige Viskosität besitzen, sich während des Verbrauchs nicht verändern, verharzen oder eindicken oder sonst in ihrer Leistung nach lassen, daß sie gegen Rost schützen, nicht schäumen, möglichst durchsichtig sind, um den Schneidvorgang beobachten zu können, und schließlich keine schädliche Wirkung auf den menschlichen Organismus ausüben.

Als Schneidflüssigkeiten werden vielfach Emulsionen vom Öl-in-Wasser-Typus verwendet. Bei diesen ist jedoch weder die Schmierwirkung noch die Kühlwirkung optimal. Je nach Qualität der Emulsion liegen die einzelnen Öl-Partikel im Bereich von einigen Mikrometern innerhalb der wässrigen Phase vor und sind beim Auftreffen auf eine Schneide nicht in der Lage, einen zusammenhängenden Schmierfilm von hoher Haftfähigkeit und Scherfestigkeit auszubilden. Dabei wird die Schmierwirkung auch durch Emulgierungs-Hilfsmittel wie Tylose und dergleichen bzw. Tenside, Seifen etc. erheblich reduziert. Hinzukommt, daß organische Fluide mit besonders hoher Schmierwirkung nur schwer emulgierbar sind, weswegen für die Herstellung stabiler Emulsionen zumeist Öle mit vergleichsweise geringer Schmierwirkung verwendet werden. Die emulgierte Phase der Schneidflüssigkeit hat aber auch eine starke Minderung der Kühlwirkung zur Folge, weil der Ölanteil im Vergleich zum Wasseranteil wesentlich höhere Verdampfungstemperaturen und geringere Verdampfungswärme aufweist. Zudem ist jede Emulsion anfällig gegen bakterielle Zersetzung und verändert im Betrieb infolge unterschiedlichen Verbrauchs der beiden Wasser/Öl-Phasen ihre Konsistenz und damit ihre spezifische Wirkung.

Aus dem CH-PS 543 344 ist ein Verfahren zum Kühlen und Schmieren von Werkzeugen bekannt, bei welchem den Werkzeugen wenigstens zwei miteinander nicht mischbare Flüssigkeiten von unterschiedlichen Eigenschaften in Bezug auf Schmierung und Kühlung Zugeleitet werden. Die von den Werkzeugen abgeführten, eine unstabile Emulsion bildenden Flüssigkeiten werden in einem gemeinsamen Behälter aufgefangen, aus diesem in einen Trennbehälter geleitet, worin sie sich voneinander trennen sollen, worauf sie aus diesem wieder den Werkzeugen zugeführt werden.

Fallweise wird zur Trennung der unterschiedlichen Phasen auch eine Trennschleuder eingesetzt.
Nachteilig verändert sich, wie bei allen als Schneidflüssigkeit verwendeten Emulsionen durch Unterschiede des Verbrauchs die Konsistenz der Emulsion und erfordert deshalb eine periodische Aufbereitung. Weil zudem eine wirklich saubere Trennung der unterschiedlichen Phasen beim Umlaufbetrieb nicht erreicht wird, und das Schmiermittel aus Gründen der Emulgierbarkeit nur eine sehr geringe Scherfestigkeit sowie Haftfähigkeit aufweist, sind sowohl der Kühlwirkung als auch in besonderem Maße der Schmierwirkung enge Grenzen gesetzt. Auch ist bei einer Emulsion eine zwischenzeitliche Variierung der Phasenanteile nicht möglich.

Aus der DE-U-9 116 481.8 ist eine Kühlschmiervorrichtung bekannt, mit der sich sehr kleine Flüssigkeitsmengen exakt auf die vorgesehene Stelle am zu kühlenden oder zu schmierenden Zerspanungsort aufbringen lassen. Dabei wird in einer unter Überdruck stehenden Mischkammer der Flüssigkeitsstrom in kleinste Tröpfchen zerteilt, mit dem Gasstrom innig vermischt, und aus der Mischkammer gezielt in mindestens zwei gebündelten Strahlen an den Ort der Zerspanung geblasen. Dabei ist auch vorgesehen, daß jeweils für Kühlung und Schmierung besonders geeignete Flüssigkeiten getrennt in die Mischkammer bzw. in den Gasstrom eingeführt werden können. Es muß also keine Emulsion angewendet werden, die sich nur schwer mischen läßt und die vorgenannten Nachteile aufweist. Andererseits liegen im gebündelten Gasstrom die unterschiedlichen Fluide gemeinsam in feinster Verteilung als Aerosole vor, was zur Folge hat, daß sich ihre Wirkungen gegenseitig erheblich beeinträchtigen.
Es kommt daher am Zerspanungsort nicht zur Ausbildung eines geschlossenen, haftfähigen und scherfesten Schmiermittelfilms, und andererseits wird die Kühlwirkung durch die im Flüssigkeitsstrom mitgeführten Öltröpfchen reduziert.

Die DE-PS 361 916 beschreibt eine Vorrichtung mit einer durch Elektromotor angetriebenen Flüssigkeitspumpe für Werkzeugmaschinen. Dabei wird der Zufluß der Kühlflüssigkeit zum Werkzeug von der Erwärmung der Werkzeuge gesteuert, indem die der Erwärmung entsprechende Antriebskraft die Drehzahl des Pumpenmotors oder ein Ventil den Zufluß unmittelbar regelt.
Aus der DE-PS 930 790 ist ein Verfahren zum Kühlen und Schmieren der Schneidkante eines metallbearbeitenden Werkzeugs bekannt. Die Erfindung sieh vor, die Kühlflüssigkeit in einem Strahl in den Raum zwischen Werkzeug und Werkstück an die Schneide zu spritzen. Zu diesem Zweck wird der Strahl aus einem Düsenmundstück mit einem Druck von mindestens 21 bar und mit einer Geschwindigkeit ausgetragen, die über 40-mal größer als die Schnittgeschwindigkeit ist und zumindest 52 m/sec beträgt. Das bekannte Verfahren ist besonders geeignet zur Kühlung und Schmierung bei Dreh- und Fräsarbeiten.
Die DE-OS 3 338 739 A1 beschreibt eine Schneidflüssigkeitszufuhrvorrichtung, die einen pulsierenden Hochdruck-Schneidflüssigkeitsstrahl an einen Bohrer oder an ein anderes Schneidwerkzeug liefert, unter Verwendung einer Kolbenpumpe, wobei die Pulsations- oder Stoßfrequenz in der gelieferten Schneidflüssigkeit auf einen vorbestimmten Wert gebracht werden kann, und zwar unabhängig vom Strömungswiderstand auf der Austrittsseite. Dadurch läßt sich das Kühlen der Werkzeugschneiden, entfernen der Späne, Standzeit des Werkzeugs und Genauigkeit der bearbeiteten Oberflächen selbst dann im gewünschten Maße erhalten, wenn der Durchmesser der Flüssigkeitsöffnung im Werkzeug klein wird.
Die EP 0 448 944 A1 beschreibt ein Verfahren und Einrichtung zum intervallweisen Versprühen einer Flüssigkeit, insbesondere einer Schmiermittel-Suspension. Diese wird mittels einer Sprühdüse in Intervallen mit hoher Frequenz unter hohem Druck versprüht. Die Sprühdüse arbeitet nach Art eines Überdruckventils, indem sie bei einem einen Schwellwert übersteigenden Eingangsdruck der Suspension selbsttätig öffnet und bei Unterschreiten des Schwellwertes selbsttätig schließt. Dabei wird eine Schmiermittelsuspension, insbesondere eine im wesentlichen Graphit sowie Polymere und Hilfsstoffe, wie Stabilisatoren suspendiert in Wasser enthaltende Hochtemperatur- Schmiermittelsuspension verwendet, welche der Sprühdüse unter sehr hohem Druck von z.B. 50-120 bar, in Spezialfällen bis 250 bar, mit Strömungsgeschwindigkeiten von 20-120 m/sec zugeführt wird. Das Verfahren erfordert einen sehr hohen Aufwand an Energie und Einrichtungen.

Die DE-OS 3 429 965 A1 beschreibt eine Schleifmaschine, insbesondere Führungsbahnschleifmaschine, mit einem Schleifkopf, wenigstens einer dem Schleifkopf zugeordneten Kühlschmiermittel-Austrittsdüse und einem Kühlschmiermittelumlauf, welcher einen Kühlschmiermitteltank, eine Kühlschmiermittelzuleitung vom Tank zur Austrittsdüse, eine Rückführleitung für das Kühlschmiermittel und eine Pumpeinrichtung zum Aufrechterhalten eines Kühlschmiermittelumlaufs umfaßt, wobei die Erfindung darin besteht, daß im Zuge der Kühlschmiermittelzuleitung eine Temperiereinrichtung zur Regelung der Temperatur des strömenden Kühlschmiermittels auf einen vorgegebenen Wert vorgesehen ist.

Daß der Fachmann unter dem Betriff der spanabhebenden Bearbeitung nicht nur die Bearbeitung von Metall versteht, sondern auch z.B. die Bearbeitung von Natur- und Kunststoffen, Gestein, Keramik, Glas oder Verbundwerkstoffen, ist beispielsweise aus dem Dokument EP-A-0 269 997 bekannt.

Weiterhin entnimmt der Fachmann dem Dokument US-A-5 042 618 die Anregung, bei spanabhebenden Bearbeitungsprozessen lediglich im Kontaktbereich zwischen Werkzeug und Werkstück Schmiermittel in geringen Mengen aufzutragen, indem ein Schmiermittel mittels eines Gases zeitlich kontrolliert auf die Bearbeitungsstelle aufgegeben wird.

Aus der US-A-4 635 513 ist ein Verfahren und eine Vorrichtung zur Kühlung und Schmierung von Schneiden bei spanabhebenden Prozessen bekannt.
Dabei ist je einem Fluid aus Öl oder Wasser ein separater Vorrats- und Entnahmebehälter sowie wenigstens ein separates Applikationsorgan und eine separate Zuführungsleitung zwischen Entnahmebehälter und Applikationsorgan zugeordnet.
Die jeweiligen Applikationsorgane sind in unterschiedlichem Abstand vom Spanabhebebereich angeordnet. In Richtung der relativen Schneidenbewegung zum Werkstück gesehen, weist das Applikationsorgan für das Schmiermittelfluid einen größeren Abstand auf, als das dem Kühlmittelfluid zugeordnete Applikationsorgan.

Ausgehend von diesem Stand der Technik liegt der Erfindung die Aufgabe zugrunde, ein Verfahren der im Oberbegriff von Anspruch 1 genannten Art und darüberhinaus eine zur Durchführung des Verfahrens geeignete Vorrichtung anzugeben, durch welche eine wesentliche Steigerung der Schmier- und Kühlwirkung im Vergleich zu den entsprechenden Wirkungen bekannter Verfahren und Vorrichtungen erzielt und die hierfür erforderlichen Mittel und Aufwendungen an Material, Energie und Einrichtungen in möglichst engen, ökonomischen Grenzen gehalten werden.

Als Folge dieser Verbesserungen der Schmier- und Kühlwirkung sollen die Standzeiten der Werkzeuge bei zugleich gesteigerter Schnittgeschwindigkeit signifikant erhöht und die Qualität der bearbeiteten Oberflächen optimiert werden.

Die Lösung der Aufgabe gelingt bei einem Verfahren der im Oberbegriff von Anspruch 1 genannten Art mit der Erfindung durch die im Kennzeichnungsteil des Anspruchs 1 genannten Merkmale.
Mit der Erfindung ergeben sich bei spanabhebenden Bearbeitungsprozessen eine Anzahl von überraschenden Vorteilen:
Beispielsweise werden im Unterschied von dem aus US-A-4,635,513 bekannten Verfahren zur Schmierung und Kühlung bei spanabhebenden Bearbeitungsprozessen gemäß Anspruch 1 die Fluide durch Aufsprühen in der im kennzeichnenden Teil angegebenen zeitlichen Reihenfolge und Dosierung aufgetragen. Dadurch wird eine verbesserte Haftfähigkeit des Schmiermittelfluids am Werkzeug oder am Werkstück durch Vermeidung einer Vermischung von Schmier- und Kühlmittel erreicht und in der Folge die Kühl- und Schmierwirkung bei sparsamstem Einsatz von Kühl- und Schmiermittel gesteigert.

Durch den erfindungsgemäß separaten Auftrag von Schmiermittelfluid und Kühlmittelfluid an getrennten Stellen des Werkzeugs und einen sich hierdurch auf dem Werkzeug bzw. auf dessen Schneide ausbildenden Schmierfluid-Film von extrem hoher Haftfähigkeit und Scherfestigkeit wird bewirkt, daß durch wesentlich bessere Schmierwirkung und infolgedessen reduzierter Reibung an Werkstück, Werkzeug und Spänen weniger Reibungswärme entsteht. Im Zuge der hierdurch günstigeren Kühlungsbedingungen wird zugleich die Qualität der bearbeiteten Oberflächen verbessert, der Energiebedarf der Bearbeitungsmaschine gesenkt, die Standzeiten der Werkzeuge signifikant erhöht, und dies bei insgesamt wesentlich erhöhter Schnittgeschwindigkeit. Dabei werden unter vergleichbaren Arbeits- und Werkstoffbedingungen Erhöhungen der Standzeit und der Schnittgeschwindigkeit fallweise zwischen einem Faktor 2 bis 5, in Extremfällen bis Faktor 10 erreicht.

Eine Ausgestaltung des Verfahrens sieht vor, daß das Schmiermittelfluid in einer dem Verbrauch im Arbeitsprozess angepaßten Menge derart aufgetragen wird, daß kein überschüssiges Schmiermittelfluid anfällt und infolgedessen eine Rezirkulation bzw. Wiederaufbereitung des Schmiermittelfluides entfällt.

Diese Maßnahme erspart die für eine Rezirkulation erforderlichen Mittel und Energien, die Bearbeitungsprodukte sowie Späne fallen sauber an und benötigen zur Weiterverarbeitung keine teure Nachbehandlung, der Schmiermittelverbrauch wird bei optimaler Schmierwirkung minimiert und sowohl die Arbeitsmaschine als auch der Arbeitsplatz und die Umwelt bleiben sauber und gesundheitlich intakt.

Eine weitere Ausgestaltung sieht vor, daß beim Sägen mit einem kreis- oder bandförmigen Sägeblatt das Kühlfluid nach Maßgabe der erforderlichen Kühlung von Werkstück und/oder Sägeblatt in einer so abgestimmt bemessenen Menge aufgetragen wird, daß es im Bearbeitungsprozeß spontan verdampft, derart, daß das separat aufzutragende Schmiermittelfluid beim Aufsprühen auf eine Stelle des Sägeblattes im Abstand vor dem Spanabhebebereich auf eine von Kühlmittelfluid freie, trockene Oberfläche des Sägeblattes unter Ausbildung eines an der Blattoberfläche gut haftenden Schmiermittelfilmes auftragbar ist. Durch diese Maßnahme wird ein Optimum sowohl der Kühlwirkung als auch der Schmierwirkung erzielt, wobei durch das gegenseitige Zusammenwirken der unterschiedlichen Mittel eine Steigerung der Gesamtwirkung nach Art eines Peak-Effektes erreicht wird.

Eine Ausgestaltung sieht weiter vor, daß bei einem relativ zum Werkstück bewegten Werkzeug, Sägeblatt oder Fräswerkzeug, das Schmiermittelfluid,in Richtung der Fortschritts- oder Schnittbewegung gesehen, an einer Stelle vor dem Spanabhebebereich und das Kühlmittel unmittelbar am Spanabhebebereich eingesetzt wird, wobei das Kühlmittelfluid auf den zuvor auf dem Werkzeug ausgebreiteten Schmiermittelfilm aufgebracht wird.
Diese erfindungswesentliche Maßnahme bringt beide Mittel zur höchstmöglichen Entfaltung sowohl ihrer Einzel- als auch ihrer Summenwirkung.

Und weiter sieht eine Ausgestaltung des Verfahrens vor, daß das Schmiermittelfluid in Form eines homogenen Aerosols im gerichteten Sprühstrahl unter Ausbildung eines äußerst dünnen Films mit hoher Grenzflächenhaftung und Scherfestigkeit in Dickenbereichen zwischen 10 und 150 Micron, bevorzugt zwischen 10 und 50 Micron und besonders bevorzugt zwischen 10 und 20 Micron aufgetragen wird.
Sowohl die extrem feste Haftung des Dünnfilms an der Grenzfläche eines Werkzeugs, als auch die ebenfalls beim Dünnfilm besonders ausgeprägte und durch Stabilisierungs-Zusätze noch verstärkte Scherfestigkeit ergeben bei äußerst minimiertem Schmiermittelverbrauch ein Höchstmaß an Schmierfähigkeit und damit eine signifikante Verminderung der Reibung bzw. Reibungswärme beim Arbeitsprozeß.

Eine weitere Ausgestaltung sieht beim erfindungsgemäßen Verfahren vor, daß das Schmiermittelfluid in einem Aerosol-Sprühstrahl mittels erwärmter Druckluft versprüht wird. Wenn auch in einer Vielzahl von Anwendungsfällen das Schmiermittelfluid mittels Luft von Umgebungstemperatur versprüht wird, so soll doch die vorstehend bezeichnete Maßnahme der Verwendung von erwärmter Luft für spezielle Anwendungen nicht unerwähnt sein. Dadurch kann ein Fluid mit relativ hoher Viskosität und besonders guten Stabilitätseigenschaften einwandfrei versprüht werden.

Das Verfahren sieht weiter vor. daß als Schmiermittelfluid vorzugsweise eine mineralölfreie Flüssigkeit verwendet wird, welche Fettsäureester und Additive zur thermischen oder mechanischen Stabilisierung und fallweise feststoffhaltige Additive in Form von Graphit oder Molybdänsulfid enthalten kann.

Sehr vorteilhaft kann das Kühlmittelfluid zur Reduzierung der Oberflächenspannung Zusätze in Form von Tensiden, Metallseifen, höherwertigen Alkoholen oder deren Derivate enthalten. Dadurch wird beim Kriechvorgang in engen Spalten an der Schneide bzw. zwischen Schneide und Werkstück die Kapillarwirkung vorteilhaft verstärkt und die Ausbreitung des Kühlmittels am Auftretort verbessert und der Dampfdruck vorteilhaft herabgesetzt.

Die Einstellung der Aufgaberate des einen oder anderen, bzw. der beiden Wirkstofffluide kann nach einem weiteren Vorschlag der Erfindung nach Maßgabe der Leistungsaufnahme der Arbeitsmaschine beim Arbeitsprozess erfolgen. Eine hierauf beruhende Regelung der individuellen Fluide ist unkompliziert und zuverlässig.

Eine Vorrichtung zur Schmierung und Kühlung von Schneiden und/oder Werkstücken bei spanabhebenden Bearbeitungsprozessen, gzeignet zur Durchführung des Verfahrens nach der Erfindung weist die im Anspruch 9 angegebenen Merkmale auf.

Die Erfindung wird in schematischen Zeichnungen in einer bevorzugten Ausführungsform gezeigt, wobei aus den Zeichnungen weitere vorteilhafte Einzelheiten der Erfindung entnehmbar sind.
Es zeigen:
- Figur 1: Ein Blockschaltbild der Vorrichtung mit teilweiser Draufsicht auf einen Sägetisch;
- Figur 2: die Vorrichtung gemäß Fig. 1 in Seitenansicht;
- Figur 3: die Vorrichtung gemäß Fig. 1 in Vorderansicht;
- Figur 4: einen Sprühkopf mit Druckversprühung ohne Gas;
- Figur 5: einen Sprühkopf mit Druckversprühung durch Druckluft;
- Figur 6: in Seitenansicht ein Kreissägeblatt mit den für Schmiermittel und Kühlmittel vorgesehenen Aufgabestellen.

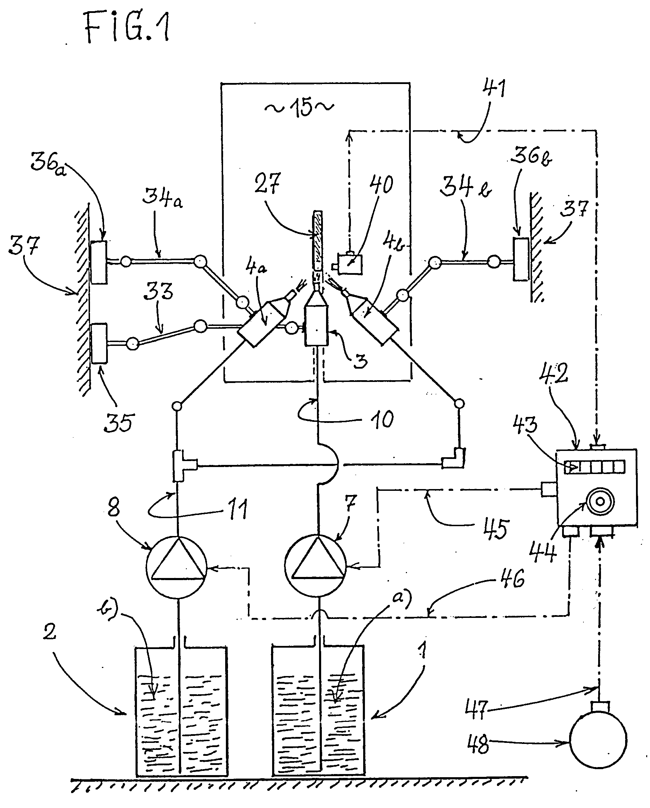

Die im Blockschaltbild der Figur 1 gezeigte Vorrichtung weist einen Entnahmebehälter 2 mit einem fluiden Substrat b) zur Kühlung eines im Schnitt aus der Draufsicht gezeigten Bandsägeblattes 27 und einen zweiten Entnahmebehälter 1 mit einem fluiden Substrat a) zur Herabsetzung der Reibung zwischen den Schneiden des Bandsägeblattes 27 und dem Werkstück 15 auf.
Jedem dieser Fluide a) bzw. b) ist wenigstens ein separates Applikationsorgan 3 bzw. 4 zugeordnet. Im gezeigten Beispiel ist dem Fluid a) nur ein Applikationsorgan 3 zugeordnet, während für das Fluid b) zwei Applikationsorgane 4a und 4b vorgesehen sind. Diese Anordnung ist jedoch nicht zwingend, es können jedem Fluid a) bzw. b) ein oder zwei oder mehr Applikationsorgane zugeordnet sein. Weiterhin besitzt jedes Fluid a) bzw. b) eine separate Zuführungsleitung 10 bzw. 11. Dabei verbindet die Zuführungsleitung 10 den Entnahmebehälter 1 für das Fluid a) mit dem Applikationsorgan 3, während die Zuführungsleitung 11 den Flüssigkeitsinhalt des Entnahmebehälters 2 für das Fluid b) mit den Applikationsorganen 4a und 4b verbindet. In jeder Zuführungsleitung 10 bzw. 11 ist als Fördermittel eine Dosierpumpe 7 bzw. 8 angeordnet.

Die Applikationsorgane 3 bzw. 4a,4b sind relativ zu der zu schmierenden und zu kühlenden Schneidenanordnung des Bandsägeblattes 27 durch einstellbare Gelenkverstrebungen 33 bzw. 34a, 34b in Positionen bringbar und z. B. mittels Magnetschuhen 35 bzw. 36a,36b am Maschinengestell 37 an beliebigen Stellen befestigbar. Dabei ist die Zuordnung der Applikationsorgane zum Schnittbereich zwischen Sägeblatt 27 und Werkstück 15 so eingerichtet, daß das die Schmierflüssigkeit a) vor dem Ort der Zerspanung sprühende Applikationsorgan 3 senkrecht gegen die Sägezähne gerichtet ist, während die beiden Kühlflüssigkeit b) versprühenden Applikationsorgane 4a, 4b unmittelbar nach dem Ort der Zerspanung jeweils aus seitlichen Schräg-Anstellungen gegen die Flanken der Sägezähne gerichtet sind.
Wie Figur 1 weiter zeigt, kann die Vorrichtung eine Einrichtung 48 mit einer Signalleitung 47 zur Erfassung der Leistungsaufnahme der Arbeitsmaschine beim Arbeitsprozess aufweisen. Diese wirkt auf die Regeleinheit 43 ein, welche eine SOLL-Wert-Einstellung 44 und eine Digitalanzeige 43 aufweist. Weiter zugeordnet mit einer Signalleitung 41 ist im Bereich des Zerspanungsortes ein Bewegungsmelder 40. Dieser schaltet die Schmier- und Kühlvorrichtung ab, sobald sich das Sägeblatt nicht mehr bewegt. Die als Beispiel gezeigte Regeleinrichtung 40 bis 48 stellt die Dosierpumpemleistung nach Maßgabe der Leistung der Arbeitsmaschine über die Leitungen 45 und 46 entsprechend einem vorgegebenen SOLL-Wert 44 ein.
Mit dieser Regeleinrichtung wird sehr vorteilhaft erreicht, daß jeweils die Aufgabemenge eines oder beider Fluide a) bzw. b) der Maschinenleistung adäquat angepaßt wird.

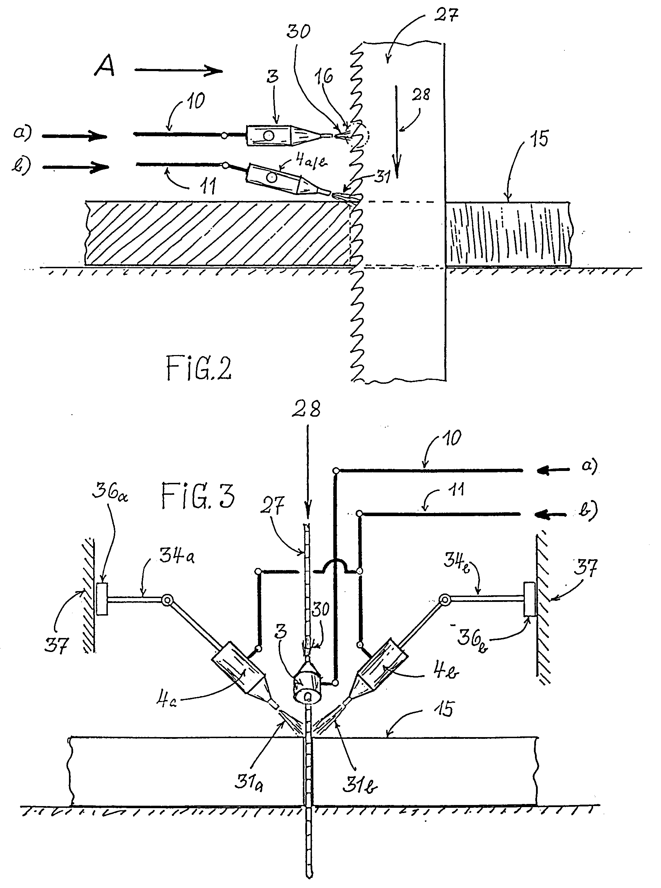

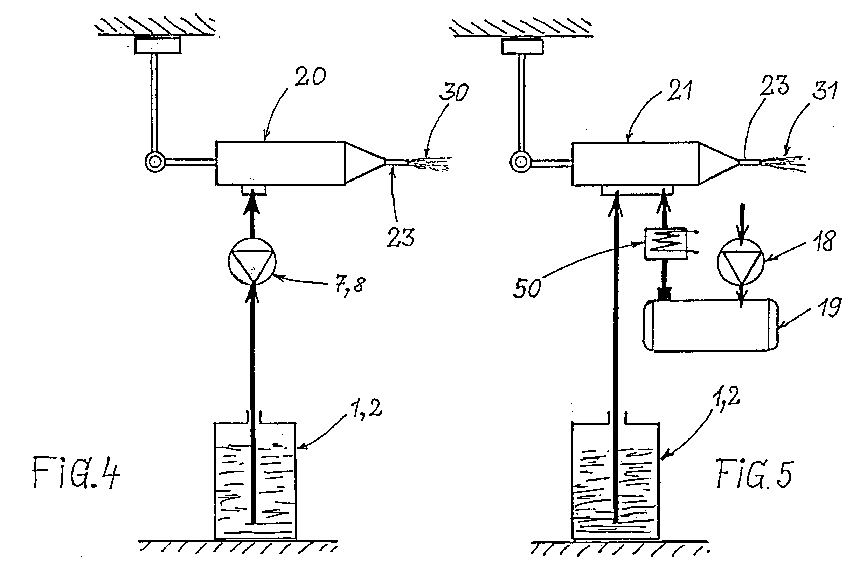

In den Figuren 2 und 3 ist die Vorrichtung gemäß Fig. 1 einmal in Seitenansicht und einmal in Ansicht aus der Richtung des Pfeils "A" von Fig. 2 gezeigt. Aus beiden Ansichten ist erkennbar, daß das Schmiermittel a) versprühende Applikationsorgan 3, in Richtung der Fortschritts- bzw. Arbeitsbewegung 28 des Sägeblattes 27 gesehen, an einem Auftragsbereich 16 vor dem Werkstück 15 aufgebracht wird. Dagegen wird das Kühlmittelfluid b) auf den bereits ausgebreiteten Schmiermittelfilm unmittelbar im Eingriffsbereich des Sägeblattes 27 gegen das Werkstück 15 aufgebracht.
Dabei ist aus den Figuren 2 und 3 zusätzlich zur Figur 4 nochmals deutlich gemacht, daß die unterschiedlichen Fluide a) und b) jeweils aus separaten Entnahmebehältern 1 und 2 durch separate Zuführungsleitungen 10 bzw. 11 aus separaten Applikationsorganen 3 bzw. 4 versprüht werden.
Aus der Darstellung der Figur 3 ist darüberhinaus erkennbar, daß der Sprühstrahl 30 des Applikationsorgans 3 schräg-aufwärts gerichtet sein kann, während die Sprühstrahlen 31a, 31b der Applikationsorgane 4a, 4b schrägabwärts gerichtet sein können. Auf diese Weise, sowie insbesondere durch die getrennte Aufgabe von Schmier- und Kühlmittel a) bzw. b) kommt jedes dieser unterschiedlichen Mittel dort optimal zur Wirkung, wo es nach Maßgabe des Zusammenwirkens zwischen den Schneiden eines Werkzeugs 27 und dem Werkstück 15 seine spezifische Aufgabe zu erfüllen hat, wobei in jedem Falle das Schmiermittel unmittelbar zuerst auf das Werkzeug aufgebracht, dabei ein Schmiermittelfilm erzeugt und danach auf diesen Film das Kühlmittel aufgebracht wird.
Aus den Figuren 4 und 5 ist erkennbar, daß jedes Applikationsorgan ein Sprühkopf 20 bzw. 21 mit Mitteln zur Erzeugung eines energiereichen, nebelarmen Sprühstrahls 30 bzw. 31 mit oder ohne Treibgas ist. Eine Einstellung der Richtung eines Sprühstrahls 30 oder 31 ist in an sich bekannter Weise bzw. mit bekannten Mitteln durchführbar.

Auch sind die Sprühdüsen für unterschiedliche Auftragsmengen oder Auftragsbedingungen (z. B. Strahldruck) auswechselbar.
Wie Figur 5 zeigt, kann wenigstens eines der Fluide a) bzw. b) mit Druckgas, Druckluft oder Inertgas aus einer an sich bekannten Injektoranordnung in einem vergleichsweise enggebündeltem Strahl 31 versprüht werden. dazu weist die Sprühvorrichtung einen Kompressor 18 mit einem Druckbehälter 19 auf.
Fallweise kann dabei zum homogenen Versprühen eines vergleichsweise hochviskosen Schmiermittels a) warme Luft mit Vorteil zum Einstz kommen. Hierfür ist in der Leitung zum Sprühkopf 21 ein Wärmeaustauscher 50 angeordnet.

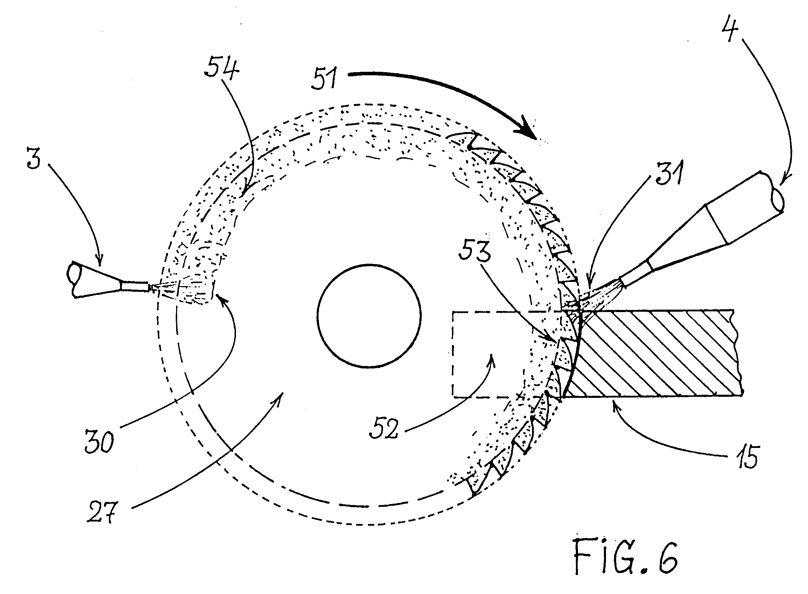

Figur 6 zeigt ein Ausführungsbeispiel unter Verwendung des Verfahrens bzw. der Vorrichtung bei einem Kreissägeblatt 27. Dieses rotiert in Richtung des Pfeiles 51 und erzeugt im Werkstück 15 einen Sägeschnitt 52. Dem Sägeblatt 27 ist zur Schmierung das Applikationsorgan 3 und zur Kühlung das Applikationsorgan 4 zugeordnet. der Ort der Zerspanung ist mit 53 bezeichnet. Die Figur 6 macht deutlich, daß das Schmiermittel a) in Form des Sprühstrahls 30 aus dem Applikationsorgan 3 und der Sprühstrahl 31 des Kühlmittels b) aus dem Applikationsorgan 4 aufgetragen wird, wobei in Richtung des Schneidvorgangs 51 des Kreissägeblattes 27 relativ zum Werkstück 15 in erfindungswesentlicher Weise vorgesehen ist, daß der Schmiermittelsprühstrahl 30 vor dem Kühlmittelsprühstrahl 31 derart aufgebracht wird, daß sich auf der Oberfläche des Sägeblattes 27 ein mit Punkten zeichnerisch angedeuteter dünner Schmierfilm 54 mit hoher Haft- und Scherfestigkeit ausbildet. Erst danach wird Kühlmittel b) als Sprühstrahl auf den Schmiermittelfilm 54 aufgetragen, und zwar unmittelbar am Zerspanungsbereich 53.

Beim Durchlauf der spanabhebenden Sägezähne durch den Zerspanungsbereich 53 verdampft das verbrauchskonform aufgetragene Kühlmittel b), entzieht damit dem Wirkungsbereich Wärme und kühlt Werkzeug 27, Werkstück 15 und die dabei anfallenden Späne. Dabei bleibt das Sägeblatt 27 an seiner durchlaufenden Oberfläche trocken und kann dann wieder mit einem erneuten Schmierfilm 54 durch den Sprühstrahl 30 beschichtet werden.

Das erfindungsgemäße Verfahren und die entsprechende Vorrichtung ergibt zusammenfassend bei deren Anwendung in Metall- und anderen Bearbeitungsprozessen spanabhebender Art folgende Vorteile:
- infolge getrennten Auftrags von Schmiermittelfluid a) und Kühlmittelfluid b) optimale Entfaltung der unter schiedlichen Wirkungen;
- durch Wegfall einer Mischphase wird jedes Fluid a) bzw. b) hinsichtlich seiner Wirkstoffzusammensetzung, Konsistenz, Viskosität, Mengenanteil, Temperatur unbeeinflußt vom anderen Fluid einsetzbar;
- durch maximale Nutzung der verfügbaren Maschinenleistung erhöhte Produktivität mit erheblicher Reduktion der Fertigungskosten;
- weniger Werkzeugverschleiß bzw. Nachschleifen bei erheblich verlängerten Standzeiten;
- bessere Qualität der bearbeiteten Flächen am Werkstück, infolgedessen auch enger einhaltbare Toleranzen;
- Wegfall von Nachbehandlungskosten infolge sauer anfallenden Spänen, Entsorgungsprobleme verbrauchter Emulsionen werden vermieden, Arbeitsplatz und Umfeld bleiben sauber, Atemluft enthält keine schädlichen ölhaltigen Aerosole wegen "Trockenschnitt";
- stark reduzierter Verbrauch der fluiden Mittel a) und b);

Damit erfüllt die Erfindung in optimaler Weise die eingangs genannten Aufgabe.

## Patentansprüche

1. Verfahren zur Schmierung und Kühlung von Schneiden und/oder Werkstücken bei spanabhebenden Bearbeitungsprozessen, wobei den Schneiden bzw. den Werkstücken wenigstens zwei untereinander nicht mischbare Fluide zugeleitet werden und dabei
- ein fluides Substrat (a) zur Herabsetzung der Reibung zwischen Schneide und Werkstück bzw. Span, sowie
- ein fluides Substrat (b) zur Kühlung von Schneide, Werkstück, Schneidenträger und fallweise auch der Späne verwendet wird, wobei
- die beiden Fluide (a,b) getrennt voneinander in je einem separaten Behälter (1,2) bevorratet bzw. aufbereitet, und
- jedes Fluid (a,b) von dem ihm zugeordneten Behälter (1,2) über eine separate Zuführungsleitung (10,11) zu einem Applikationsorgan (3,4) gefördert, und
- jedes Fluid (a,b) aus dem ihm zugeordneten Applikationsorgan (3,4) auf das zu bearbeitende Werkstück (15) bzw. auf die im Einsatz befindliche Schneide aufgesprüht werden, dadurch gekennzeichnet, daß bei der Relativbewegung von Schneide und Werkstück (15) in Richtung auf den Durchdringungs- bzw. Spanabhebebereich zuerst das Schmiermittelfluid (a) unter Ausbildung eines haftfähigen Schmiermittelfilms und danach das Kühlmittelfiuid (b) auf den ausgebreiteten Schmiermittelfilm nach Maßgabe der erforderlichen Kühlung von Werkstück (15) und/oder Werkzeug (27) in einer so abgestimmt bemessenen Menge aufgesprüht wird, daß es im Bearbeitungsprozeß spontan verdampft, derart, daß das Schmiermittelfluid (a) beim separaten Aufsprühen auf eine Stelle des Werkstücks (15) oder Werkzeugs (27) im Abstand vor dem Spanabhebebereich auf eine von Kühlmittelfluid (b) freie, trockene Oberfläche des Werkstücks (15) oder Werkzeugs (27) auftrifft und dabei an der Werkstück- oder Werkzeugoberfläche einen gut haftenden Schmiermittelfilm ausbildet.

2. Verfahren nach Anspruch 1, dadurch gekennzeichnet, daß das Schmiermittelfluid (a) in einer dem Verbrauch im Arbeitsprozess angepaßten Menge derart aufgetragen wird, daß kein überschüssiges Schmiermittelfluid (a) anfällt und infolgedessen eine Rezirkulation bzw. Wiederaufbereitung vermieden wird.

3. Verfahren nach einem oder mehreren der Ansprüche 1 oder 2, dadurch gekennzeichnet, daß bei einem relativ zum Werkstück (15) bewegten Werkzeug, Sägeblatt oder Fräswerkzeug (27) das Schmiermittelfluid (a), in Richtung der Fortschritts- bzw. Schnittbewegung gesehen, an einer Stelle (16) vor dem Spanabhebebereich, und das Kühlmittelfluid (b) unmittelbar am Spanabhebebereich eingesetzt wird, wobei das Kühlmittelfluid (b) auf den zuvor auf dem Werkzeug (27) ausgebreiteten Schmiermittelfilm aufgebracht wird.

4. Verfahren nach einem oder mehreren der Ansprüche 1 bis 3, dadurch gekennzeichnet, daß das Schmiermittelfluid (a) in Form eines homogenen Aerosols im gerichteten Sprühstrahl (30) unter Ausbildung eines äußerst dünnen Films mit hoher Grenzflächenhaftung und Scherfestigkeit in Dickenbereichen zwischen 10 und 150 Micron, bevorzugt zwischen 10 und 20 Micron aufgetragen wird.

5. Verfahren nach einem oder mehreren der Ansprüche 1 bis 4, dadurch gekennzeichnet, daß das Schmiermittelfluid (a) in einem Aerosol-Sprühstrahl (30) mittels erwärmter Druckluft versprüht wird.

6. Verfahren nach einem oder mehreren der Ansprüche 1 bis 5, dadurch gekennzeichnet, daß als Schmiermittelfluid (a) vorzugsweise eine mineralölfreie Flüssigkeit verwendet wird, welche Fettsäureester und Additive enthält, wobei Additive zur thermischen Stabilisierung und/oder Additive zur mechanischen Stabilisierung und fallweise feststoffhaltige Additive in Form von Graphit oder Molybdänsulfid verwendet werden.

7. Verfahren nach einem oder mehreren der Ansprüche 1 bis 6, dadurch gekennzeichnet, daß dem Kühlmittelfluid (b) Mittel zur Reduzierung der Oberflächenspannung in Form von Tensiden, Metallseifen, höherwertigen Alkoholen oder deren Derivaten zugesetzt werden.

8. Verfahren nach einem oder mehreren der Ansprüche 1 bis 7, dadurch gekennzeichnet, daß die Förderleistung bzw. Aufgabemenge für das Schmiermittelfluid (a) und das Kühlmittelfluid (b) nach Maßgabe der Leistung der Arbeitsmaschine entsprechend einem vorgegebenen SOLL-Wert (44) eingestellt wird.

9. Vorrichtung zur Schmierung und Kühlung von Schneiden und/oder Werkstücken bei spanabhebenden Bearbeitungsprozessen, geeignet zur Durchführung des Verfahrens nach einem der Ansprüche 1 bis 8, unter Verwendung eines Schmiermittelfluids (a) und eines Kühlmittelfluids (b), wobei jedem der Fluide (a;b)
- ein separater Vorrats- und Entnahmebehälter (1;2), und
- wenigstens ein separates Applikationsorgan (3;4), sowie
- eine separate Zuführungsleitung (10;11) mit je einer Dosierpumpe (7;8) als Fördermittel zwischen dem Entnahmebehälter (1;2) und dem/den Applikationsorganen (3;4) zugeordnet ist
und die Applikationsorgane (3;4) in unterschiedlichem Abstand vom Spanabhebebereich angeordnet und das dem Schmiermittelfluid (a) zugeordnete Applikationsorgan (3) - in Richtung der relativen Schneidenbewegung zum Werkstück gesehen - einen größeren Abstand vom Spanabhebebereich aufweist, als das dem Kühlmittelfluid (b) zugeordnete Applikationsorgan (4),
dadurch gekennzeichnet, daß die Vorrichtung ein Meßglied (48) zur Erfassung der Leistungsaufnahme der Arbeitsmaschine beim Spanabheben und eine Singnalleitung (47) zur Aufschaltung des Meßwertes auf eine Meß- und Regeleinheit (42) aufweist, welche die Fördermittel (7;8) für die Fördermenge der Fluide (a;b) nach Maßgabe des Meßwertes einstellt.

## Claims

1. A process for lubricating and cooling cutting edges and/or workpieces in machining processes with chip removal, wherein at least two fluids which are immiscible with each other are fed to the cutting edges or the workpieces using
- a fluid substrate (a) to reduce the friction between cutting edge and workpiece or chip, and
- a fluid substrate (b), to cool the cutting edge, workpiece, cutting edge support and, if necessary, the chips, whereby
- the two fluids (a,b) are stored or processed separately, each in separate containers (1,2), and
- each fluid (a,b) is conveyed from its associated container (1,2) via a separate feed line (10,11) to an application element (3,4), and
- each fluid (a,b) is sprayed from its associated application element (3,4) onto the workpiece (15) to be machined or to the cutting edge in use, **characterised in that**
during the relative motion of the cutting edge and the workpiece (15) towards the penetration or chip removal section, the lubricating fluid a) is sprayed first, under formation of an adherent lubricant film, and that then the cooling fluid b) is sprayed on the spread lubricant film in accordance with the required cooling of the workpiece (15) and/or tool (27) in an amount adapted such that it spontaneously evaporates during the machining process, in such a manner that the lubricating fluid (a), when it is, separately, sprayed on a point of the workpiece (15) or tool (27) at a distance in front of the chip removing section impacts on a dry surface of the workpiece (15) or tool (27), which is free from cooling fluid (b), thus forming a lubricant film, having good adhesion, on the surface of the workpiece or tool.

2. The process according to claim 1 characterized in that the lubricant fluid (a) is applied in an amount adapted to the consumption during the work process in such a manner that there is no excess lubricating fluid (a), and that owing to this recirculation or reprocessing is avoided.

3. The process according to one or several of claims 1 or 2 characterized in that with a tool, saw blade, or milling cutter (27) moved relative to the workpiece (15), the lubricant fluid (a) is used at a point (16) ahead of the chip removing region, viewed in the direction of advance or cutting motion, and that the coolant (b) is used directly at the region of chip removal, the coolant fluid (b) being applied on the lubricant film previously spread on the tool (27).

4. The process according to one or several of claims 1 to 3 characterized in that the lubricant fluid (a) is applied in the form of a homogeneous aerosol in a directed spray stream (30) under formation of an extremely thin film having a high interfacial bonding and shear stability at thicknesses ranging between 10 and 150 microns, preferably between 10 and 50 microns, and most preferably between 10 and 20 microns.

5. The process according to one or several of claims 1 to 4 characterized in that the lubricating fluid (a) is sprayed in an aerosol-spray-jet (30) by means of heated compressed air.

6. The process according to one or several of claims 1 to 5 characterized in that a mineral oil-free liquid which comprises fatty acid esters and additives as well as additives for the thermal stabilization and/or additives for the mechanical stabilization is preferably used as lubricant fluid (a), and that optionally solids-containing additives in the form of graphite or molybdenum sulfide are used.

7. The process according to one or several of claims 1 to 6 characterized in that agents for reducing the surface tension in the form of surfactants, metallic soaps, polyhydric alcohols or their derivatives are added to the cooling fluid (b).

8. The process according to one or several of claims 1 to 7 characterised in that the feed power or feed amount for the lubricant fluid (a) and the cooling fluid (b) is adjusted, depending on the performance of the machine tool, in accordance with a given reference input (44).

9. A device for lubricating and cooling cutting edges and/or workpieces in machining processes with chip removal, suitable for carrying out the process according to any one of claims 1 to 8, employing a lubricant fluid (a) and a cooling fluid (b), whereby to each of the fluids (a;b) there is assigned
- a separate storage and withdrawal vessel (1;2), and
- at least one separate application element (3;4), as well as
- a separate feed line (10;11), each having a metering pump (7;8) as conveyance means, located between the withdrawal container (1;2) and the application element(s) (3;4), and
wherein the application elements (3;4) are located at different distances to the chip removing section and the application element (3) which is associated to the lubricant fluid (a) - viewed in direction of the relative cutting edge motion to the workpiece - has a greater distance to the chip removing region than the application element (4) associated to the cooling fluid (b),
**characterized in that** the device has a measuring member (48) for registration of the power input of the machine tool during machining and a signal line (47) for sending the measured value to a measuring and controlling unit (42) which adjusts the conveying means (7;8) for the delivery of fluids (a;b) in accordance with the measured value.

## Revendications

1. Procédé pour la lubrification et le refroidissement de corps de coupe et/ou de pièces dans des procédés de traitement à enlèvement de copeaux, au moins deux fluides non miscibles l'un avec l'autre étant amenés aux corps de coupe ou aux pièces, et dans lequel
- on utilise un substrat fluide (a) pour diminuer le frottement entre le corps de coupe et la pièce ou les copeaux, ainsi que
- un substrat fluide (b) pour le refroidissement du corps de coupe, de la pièce, du support du corps de coupe et éventuellement également des copeaux, tandis que
- les deux fluides (a, b) sont conservés et préparés séparément l'un de l'autre, chacun dans un conteneur (1, 2) séparé, et
- de son conteneur associé (1, 2), chaque fluide (a, b) est transporté à un organe d'application (3, 4) par une conduite d'amenée séparée (10, 11), et
- chaque fluide (a, b) est projeté par l'organe d'application (3, 4) qui lui est associé, sur la pièce (15) à traiter ou sur le corps de coupe utilisé,
caractérisé en ce que lors du déplacement relatif du corps de coupe et de la pièce (15), le fluide de lubrification (a) est projeté tout d'abord en direction de la région de pénétration ou d'enlèvement de copeaux, en formant un film adhérant d'agent de lubrification, et le fluide de refroidissement (b) est ensuite projeté sur le film d'agent de lubrification réparti, dans une quantité déterminée compte tenu du refroidissement nécessaire de la pièce (15) et/ou de l'outil (27), de telle sorte qu'il se vaporise spontanément au cours de l'opération de traitement, de telle manière que lors d'une projection séparée sur un emplacement de la pièce (15) ou de l'outil (27) situé à distance en avant de la région d'enlèvement des copeaux, le fluide de lubrification (a) est déposé sur une surface de la pièce (15) ou de l'outil (27) qui est sèche et exempte de fluide de refroidissement (b), et forme ainsi à la surface de la pièce ou à la surface de l'outil un film de lubrification présentant une bonne adhérence.

2. Procédé selon la revendication 1, caractérisé en ce que le fluide de lubrification (a) est appliqué en une quantité adaptée à sa consommation dans l'opération de travail, de telle sorte qu'il n'apparaisse pas un excès de fluide de lubrification (a) et que l'on évite par conséquent une recirculation ou la nécessité de le préparer à nouveau.

3. Procédé selon l'une ou plusieurs des revendications 1 ou 2, caractérisé en ce que dans le cas d'un outil qui se déplace par rapport à la pièce (15), une lame de scie ou un outil de fraisage (27), le fluide de lubrification (a) est appliqué en un endroit (16) situé en avant de la région d'enlèvement des copeaux dans la direction du déplacement d'avance ou de coupe, et le fluide de refroidissement (b) est appliqué directement sur la région d'enlèvement des copeaux, le fluide de refroidissement (b) étant appliqué sur le film de lubrification réparti préalablement sur l'outil (27).

4. Procédé selon l'une ou plusieurs des revendications 1 à 3, caractérisé en ce que le fluide de lubrification (a) est appliqué sous la forme d'un aérosol homogène dans un jet orienté de projection (30), avec formation d'un film extrêmement mince présentant une adhérence élevée aux surfaces limites et une résistance élevée à la déchirure, dans une plage d'épaisseurs de 10 à 150 micromètres, et de préférence de 10 à 20 micromètres.

5. Procédé selon l'une ou plusieurs des revendications 1 à 4, caractérisé en ce que le fluide de lubrification (a) est projeté sous la forme d'un jet d'aérosol (30) au moyen d'air comprimé réchauffé.

6. Procédé selon l'une ou plusieurs des revendications 1 à 5, caractérisé en ce que l'on utilise comme fluide de lubrification de préférence un liquide exempt d'huiles minérales, qui contient des esters d'acide gras et des additifs, les additifs utilisés étant des additifs en vue de la stabilisation thermique et/ou des additifs en vue de la stabilisation mécanique, et éventuellement des additifs contenant des solides, sous la forme de graphite ou de sulfure de molybdène.

7. Procédé selon l'une ou plusieurs des revendications 1 à 6, caractérisé en ce qu'au fluide de refroidissement (b), on ajoute des agents en vue de la réduction de la tension superficielle, qui présentent la forme d'agents tensioactifs, de savons métalliques, d'alcools supérieurs ou de dérivés de ceux-ci.

8. Procédé selon l'une ou plusieurs des revendications 1 à 7, caractérisé en ce que le débit ou les quantités appliquées d'agent de lubrification (a) et d'agent de refroidissement (b) sont ajustés en correspondance à une valeur de consigne (44) après détermination de la puissance consommée par la machine de travail.

9. Dispositif pour la lubrification et le refroidissement de corps de coupe et/ou de pièces dans des procédés de traitement à enlèvement de copeaux, convenant pour la réalisation du procédé selon l'une des revendications 1 à 8, avec utilisation d'un fluide de lubrification (a) et d'un fluide de refroidissement (b), dans lequel à chacun des fluides (a; b) est associé un conteneur de réserve et de reprise (1; 2) séparé ainsi qu'au moins un organe d'application séparé (3; 4), que des conduites d'amenée séparées (10; 11) qui présentent chacune une pompe de dosage (7; 8) servant de moyen de transport entre le conteneur de reprise (1; 2) et le ou les organes d'application (3; 4), et les organes d'application (3; 4) sont disposés à distances différentes de la région d'enlèvement des copeaux, et l'organe d'application (3) associé au fluide de lubrification (a) présente dans la direction du déplacement relatif des corps de coupe par rapport à la pièce une distance plus grande par rapport à la région d'enlèvement des copeaux que l'organe d'application (4) associé au fluide de refroidissement (b),
caractérisé en ce que le dispositif présente un organe de mesure (48) en vue de déterminer la puissance de consommation de la machine de travail lors de l'enlèvement des copeaux et un conducteur de signalisation (47) servant à appliquer la valeur de mesure sur une unité (42) de mesure et de régulation qui règle les moyens de transport (7; 8) de la quantité des fluides (a; b) à transporter en fonction de la valeur mesurée.
